# EUROPEAN PATENT SPECIFICATION

(11) **EP 2 521 652 B1**
(45) Date of publication and mention of the grant of the patent: **05.03.2014**
(21) Application number: 11706968.2
(22) Date of filing: 07.01.2011
(51) Int. Cl.: B32B 37/06, B32B 37/00, B41J 2/32

(54) **LAMINATOR WITH LAMINATING HEAD COMPRISING A PLURALITY OF SELECTIVELY ACTIVATABLE HEATING ELEMENTS AND METHOD USING THE SAME**
LAMINIERVORRICHTUNG MIT LAMINIERKOPF UMFASSEND MEHREREN SELEKTIV AKTIVIERBAREN ERWÄRMUNGSELEMENTEN UND IHR VERWENDUNGSVERFAHREN
APPAREIL À LAMINER À TÊTE DE LAMINAGE COMPRENANT PLUSIEURS ÉLÉMENTS CHAUFFANTS ACTIVABLES SÉLECTIVEMENT ET MÉTHODE D'UTILISATION ASSOCIÉE

(30) Priority: 07.01.2010 US 292893 P
(43) Date of publication of application: 14.11.2012
(73) Proprietor: HID Global Corporation, Irvine, CA 92618-3106 (US)
(72) Inventor: LIEN, Brent, D., Minneapolis MN 55409 (US); KARST, Karl, A., Woodbury MN 55129 (US); JOHNSON, Traci, Savage MN 55378 (US); NIPPOLDT, Joshua, Bloomington MN 55431 (US); MULARONI, Johanna, Minneapolis MN 55408 (US)
(74) Representative: Weihs, Bruno Konrad
(86) International application number: PCT/US2011/020483
(87) International publication number: WO 2011/085174

(56) References cited:
- WO-A1-2008/118424
- US-A- 5 011 707
- US-A1- 2005 269 033
- US-B1- 6 264 296

## Description

### FIELD

Embodiments of the present invention relate to transfer lamination operations on a card substrate using a laminating head having one or more heating elements.

### BACKGROUND

Credentials include identification cards, driver's licenses, passports, and other documents. Such credentials are formed from credential or card substrates including paper substrates, plastic substrates, cards and other materials. Such credentials generally include printed information, such as a photo, account numbers, identification numbers, and other personal information. Credentials can also include data that is encoded in a smartcard chip, a magnetic stripe, or a barcode, for example.

Credential production devices process credential substrates by performing at least one processing step in forming a final credential product. One such process is a transfer or laminating process that transfers a material to a surface of the card substrate using a heated roller as in WO 2008/118424 A1. This process can be used to transfer an image to the surface of the card substrate and/or provide protection to the surface of the card substrate from abrasion and environmental conditions, for example.

The material transferred to the surface of the card substrate using the heated roller is generally one of two types: a patch laminate, or a fracturable laminate or transfer layer often referred to as a "thin film laminate." The patch laminate is generally a pre-cut polyester film that has been coated with a thermal adhesive on one side. The pre-cut patch is removably attached to a continuous web liner which is generally a coated polyester material. The pre-cut patch is attached to the liner with the thermal adhesive side exposed and available for lamination to the substrate. The heated roller is used to heat the patch to activate the adhesive and press the patch to the surface of the substrate to bond the patch onto the surface.

One disadvantage to the use of a patch laminate is that it does not provide edge-to-edge protection to the surface of the card substrate because it must be formed slightly smaller than the surface of the card to ensure that the patch laminate does not extend beyond the card's edges. Another disadvantage to the use of the patch laminate appears when the surface of the card substrate requiring protection includes a feature over which the patch laminate should not be applied. Such features may include, for example, a magnetic stripe, a signature panel, a surface hologram feature, or electrical contacts of a smartcard module. In order to provide protection of graphics when these features are present, portions of the patch laminate must be removed prior to lamination to expose the feature. Further, it may be desirable to avoid heating some portions of the surface of the card substrate, something which is generally not possible using the heated roller.

Transfer layers are generally continuous resinous materials that have been coated onto a continuous web liner. The side of the resin material that is not attached to the continuous web liner is generally coated with a thermal adhesive which is used to create a bond between the resin and the surface of the substrate. The heated roller is used to activate the adhesive and press the resinous material against the surface of the substrate to bond the material to the surface. The web liner or backing layer is removed to complete the lamination process. The transfer layer provides protection to the surface of the card.

The transfer layer may also be in the form of a print intermediate, on which an image may be printed in a reverse-image printing process. In the reverse-image printing process, an image is printed to the exposed side of the transfer layer. Next, the image on the transfer layer is registered with the card substrate. The heated roller is used to activate the adhesive on the imaged transfer layer causing the imaged transfer layer to bond to the surface of the card substrate. A backing layer of the overlaminate material is removed from the bonded imaged transfer layer to complete the transfer of the image to the card substrate. The transfer layer provides protection to the image and the surface of the card substrate.

It may be necessary to avoid transferring the transfer layer over certain features that may be present on the surface of the card substrate, such as those mentioned above. One technique that is used to prevent the transference of the transfer layer to select portions of the card surface involves the use of an inhibitor panel of a print ribbon. The inhibitor panel is positioned over the imaged transfer layer of the transfer ribbon and the print head selectively activates portions of the inhibitor panel corresponding to portions of the imaged transfer layer that should be prevented from being transferred to the surface of the substrate. The activation of the selective locations of the inhibitor panel cause those activated portions of the inhibitor panel to adhere to the corresponding portions of the imaged transfer layer through the activation of the adhesive in the transfer layer. As the print ribbon is pulled away from the imaged transfer ribbon, the activated portions of the inhibitor layer remove the corresponding imaged transfer layer portions from the transfer ribbon. The transfer ribbon then includes the remaining imaged transfer layer which was not removed through bonding with the inhibitor layer of the print ribbon. The gaps in the imaged transfer layer on the transfer ribbon that correspond to the removed sections of the imaged transfer adhesive correspond to the locations of the features of the substrate where the transference of the transfer layer is undesired. Accordingly, the sections of the substrate where the transference of the imaged transfer layer is undesired remain free of the transfer layer following the transference of the imaged transfer layer from the transfer ribbon to the surface of the substrate using the heated roller.

### SUMMARY

Embodiments in the invention are directed to a laminator and method. One embodiment of the laminator comprises a laminating head and a processor. The laminating head comprises a plurality of heating elements. Each heating element has an activated state, in which the heating element is powered by a current, and a deactivated state, in which the heating element is not powered by a current. The processor selectively places the individual heating elements in the activated or deactivated state. The selective activation and deactivation of the heating elements is used to bond at least a portion of an overlaminate material to a surface of a substrate.

In one embodiment of the method, a laminator is provided comprising a laminating head and a processor. The laminating head comprises a plurality of heating elements. Each of the heating elements has an activated state, in which the heating element is powered by a current, and a deactivated state, in which the heating element is not powered by a current. A substrate is positioned proximate the heating elements and an overlaminate material is positioned between the substrate and the heating elements. The individual heating elements are selectively placed in the activated or deactivated state using the processor. At least a portion of the overlaminate material is bonded to a surface of the substrate responsive to the selective placement of the individual heating elements in the activated or deactivated state.

Other features and benefits that characterize embodiments of the present invention will be apparent upon reading the following detailed description and review of the associated drawings.

### BRIEF DESCRIPTION OF THE DRAWINGS

FIG. 1 is a simplified side cross-sectional view of an overlaminate material in accordance with embodiments of the invention.
FIGS. 2 and 3 are top plan view of an overlaminate material in accordance embodiments of the invention.
FIG. 4 is a simplified side view of a laminator in accordance with the prior art performing a transfer or lamination operation.
FIG. 5 is a top plan view of a portion of the laminator of FIG. 3 with the overlaminate material illustrated in phantom.
FIG. 6 is a schematic diagram of a laminator in accordance with embodiments of the invention.
FIG. 7 is a side cross-sectional view of a portion of a laminating head, in accordance with embodiments of the invention.
FIG. 8 is a simplified front cross-sectional view of a laminating head in accordance with embodiments of the invention.
FIG. 9 is a simplified front cross-sectional view of a laminating head in accordance with embodiments of the invention.
FIG. 10 is a simplified top view of the overlaminate material over a substrate illustrating lines of heat in accordance with embodiments of the invention.
FIG. 11 is a simplified bottom view of a laminating head in accordance with embodiments of the invention.
FIG. 12 is a top view of a processed substrate in accordance with embodiments of the invention.
FIG. 13 is a flowchart illustrating a method in accordance with embodiments of the invention.

### DETAILED DESCRIPTION OF ILLUSTRATIVE EMBODIMENTS

The ensuing description provides exemplary embodiments only, and is not intended to limit the scope, applicability or configuration of the disclosure. Rather, the ensuing description of the exemplary embodiments will provide those skilled in the art with an enabling description for implementing one or more exemplary embodiments. It being understood that various changes may be made in the function and arrangement of elements without departing from the spirit and scope of the invention as set forth in the appended claims.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure or described herein.

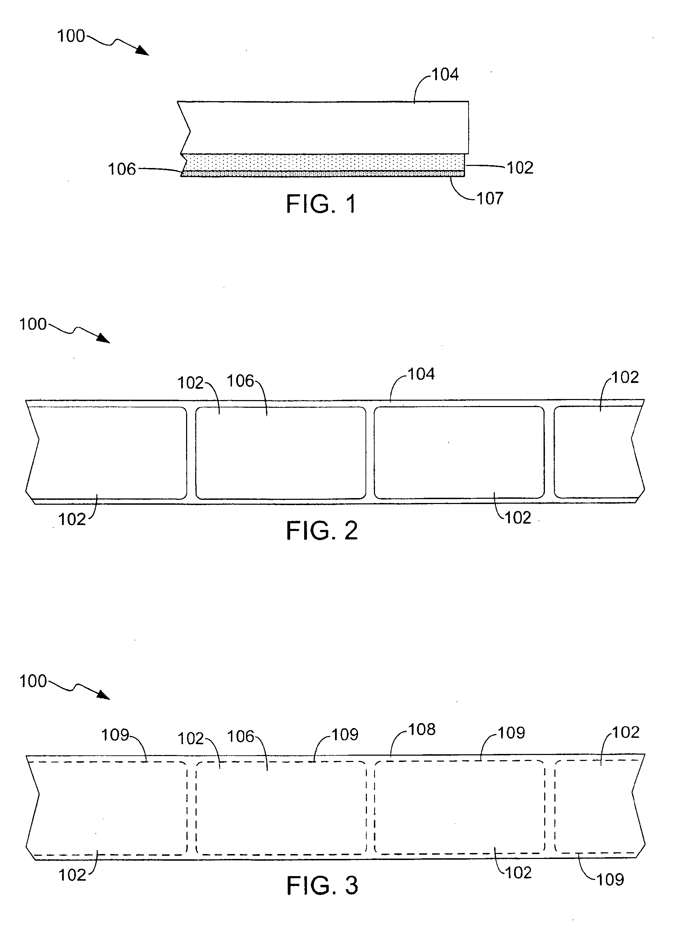

FIG. 1 is a simplified side cross-sectional view of an overlaminate material 100 in accordance with embodiments of the invention. In one embodiment, the overlaminate material 100 includes a transfer layer 102, at least a portion of which is configured to be transferred to a surface of a substrate during a lamination operation.

In one embodiment, the overlaminate material 100 includes a backing or carrier layer 104 having a transfer layer 102 in the form of a fracturable laminate or thin film laminate. The thin film laminate 102 is adhered to the backing layer 104. In one embodiment, the thin film laminate 102 includes a thermal adhesive or an adhesive-like substance 106. The thermal adhesive is activated during a lamination process to bond the layer 102 to a substrate. The overlaminate material 100 may also comprise other layers and materials, such as, for example, a release layer that simplifies the release of the thin film laminate 102 from the backing layer, that are not shown in order to simplify the illustration.

The thin film laminate 102 may also be configured to receive an image on the surface 107. The image may be printed to the surface 107 in accordance with conventional techniques, such as dye sublimation or inkjet printing processes. The transfer layer 102 with the printed image on the surface 107 is then laminated to a substrate. One exemplary reverse-image printing process is generally described in U.S. Patent No. 6,554,044, which is assigned to HID Global Corporation.

FIG. 2 is a top plan view of an overlaminate material 100 in accordance with another embodiment, in which the transfer layer 102 is in the form of a patch laminate having a layer of thermal adhesive 106. In one embodiment, the patch laminates 102 are formed of a thin plastic overlaminate film. In one embodiment, the patch laminates 102 are releasably adhered to a backing layer 104, as shown in FIG. 2. The side of the patches opposite the backing layer 104 includes the thermal adhesive 106 which is activated during the lamination process to bond the patch to the substrate.

In accordance with another embodiment, the patch laminates 102 are not adhered to the backing layer 104. In one embodiment, the patch laminates 102 are in the form of a continuous web 108 of the plastic overlaminate film, which is die cut to form a plurality of the patch laminates 102, as shown in the top plan view of FIG. 3. In one embodiment, the web 108 is die cut to form the patch laminates 102 that are attached to the remainder of the web 108 by a perforated edge 109. In accordance with another embodiment, patch laminates 102 are directly linked together by a perforated edge. In a lamination operation in accordance with embodiments of the invention, the adhesive 106 of a patch laminate 102 is thermally activated to bond the patch laminate 102 to a surface of a substrate and the web 108 is detached from the patch laminate 102 at the perforated edge 109 leaving the patch laminate 102 attached to the substrate.

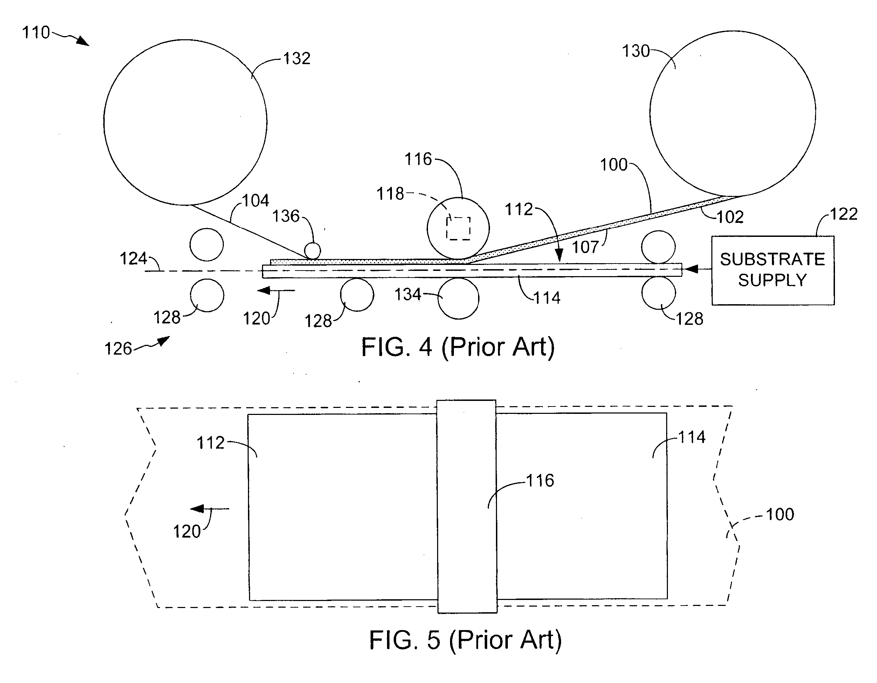

FIG. 4 is a simplified side view of a laminator 110, in accordance with the prior art, performing a transfer or lamination operation, in which the transfer layer 102 is bonded to a surface 112 of a card substrate 114. FIG. 5 is a top plan view of a portion of the laminator 110 of FIG. 4 with the overlaminate material 100 illustrated in phantom. The transfer layer 102 operates to protect a surface 112 of the card substrate 114, which may include a printed image.

The laminator 110 comprises a heated laminating roller 116, which is heated by an internal heating mechanism 118, such as a resistive heating element. The laminating roller 116 is typically formed of metal with a low-adhesion exterior surface. The overlaminate material 100 is supported for rotation about an axis that is generally parallel to the card substrate 114, to which the transfer layer 102 is to be applied, and perpendicular to the feed direction (arrow 120), in which the card substrate and overlaminate material 100 travels during the lamination operation. Individual card substrates 114 are fed from a substrate supply 122 along a processing path 124 using a transport mechanism 126 that includes feed rollers 128.

The laminator 110 includes supply and take up rolls 130 and 132 that support the overlaminate material 100. The overlaminate material 100 is fed between the surface 112 of the card substrate 114 and the laminating roller 116, as shown in FIG. 4. The heated laminating roller 116 presses the transfer layer 102 against the surface 112 of the substrate 114, which may be supported by a platen 134. The heated laminating roller 116 activates the adhesive at the surface 107 of the transfer layer 102, which adheres the transfer layer 102 to the surface 112 of the card substrate 114. As the card substrate 114 is fed along the processing path 124, the backing layer 104 is removed from the transfer layer 102 using a peel off roller 136 leaving the transfer layer 102 adhered to the surface 112 to complete the lamination operation.

One of the disadvantages of using the heated transfer roller 116 of the prior art, is the time required to heat the laminating roller 116 to a temperature that is required to perform the laminating operation. This temperature is typically in the range of 175-190°C. Warm up periods for the laminating roller 116 in accordance with the prior art, are typically in the range of 3-6 minutes. Additionally, the heated laminating roller 116, which requires a heating rod, a roller, and a resistive heating device 118, can be expensive.

The lengthy heating period required to prepare the laminator 110 for performing a laminating operation also consumes energy during the warm up period. This energy consumption is particularly wasteful when a user of the device only needs to perform a few laminating operations.

Heat also builds up within the housing (not shown) of the device that encloses the components of the laminator 110. The heat given off by the laminating roller 116 during the warm-up period, during laminating operations, and as the roller 116 cools down, significantly raises the internal temperature of the housing of the device. This can have adverse effects on the print ribbon, electronics, and other components of the device. One particular problem is delamination of the transfer layer 102 from the surface 112 of the card when the backing layer 104 is lifted by the peel off roller 136 because the thermal adhesive 106 fails to cool sufficiently to form the necessary bond with the surface 112 of the substrate 114.

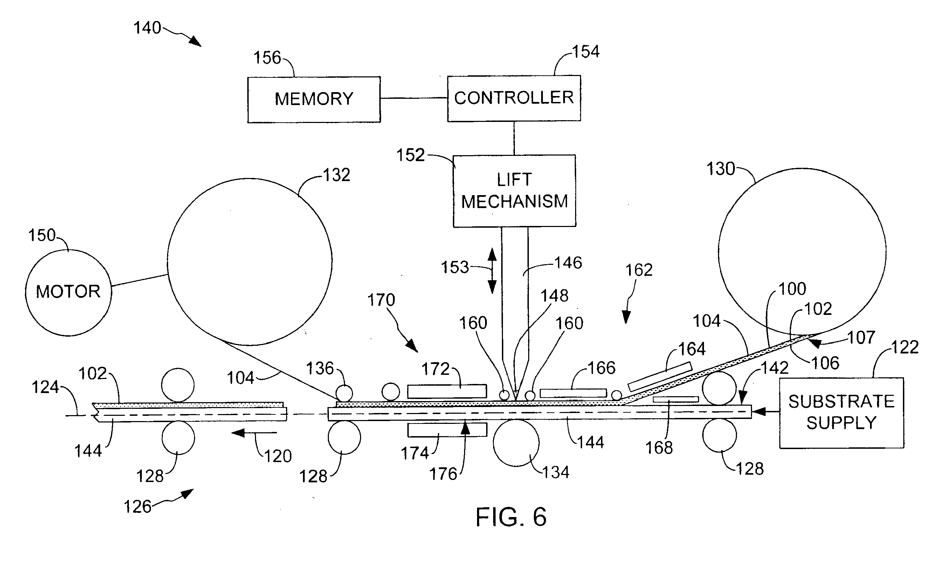

FIG. 6 is a schematic diagram of a laminator 140 in accordance with embodiments of the present invention. Elements having the same or similar reference numbers as those described above are the same or similar elements. The laminator 140 may be a component of a dedicated substrate laminator to apply the transfer layer 102 (e.g., fracturable thin-film, overlaminate patch, etc.) to a surface 142 of a substrate 144. The laminator 140 may also be used in a reverse-image printing device that includes components for printing an image to the surface 107 of the transfer layer 102 prior to the transfer or lamination of the transfer layer 102 to the surface 142 of the substrate 144.

The substrate 144 may take on many different forms, as understood by those skilled in the art. In one embodiment, the substrate 144 is a credential substrate. As used herein, the term "credential substrate" includes substrates used to form credentials, such as identification cards, membership cards, proximity cards, driver's licenses, passports, credit and debit cards, and other credentials or similar products. Exemplary card substrates include paper substrates other than traditional paper sheets used in copiers or paper sheet printers, plastic substrates, rigid and semi-rigid card substrates and other similar substrates.

The laminator 140 comprises a laminating head 146, which is not in the form of the heated laminating roller described above. In one embodiment, the laminating head 146 includes one or more heating elements 148 that are not contained within a laminating roller. In one embodiment, the heating element or elements 148 are supported by the head 146 in a position that allows them to engage, or be placed in close proximity to, the overlaminate material 100, which may be supported between supply and take-up rolls 130 and 132. In one embodiment, a motor 150 drives the rotation of the take-up roll 132 to wind the material 100 from the supply roll 130 onto the take-up roll 132.

A transfer or laminating operation is performed by heating the overlaminate material 100 using the one or more heating elements 148 to activate the adhesive or adhesive-like layer 106 of the transfer layer 102 and enable the transfer layer 102, or a portion thereof, to bond to the surface 142 of a substrate 144, as illustrated in FIG. 6.

In one embodiment, the one or more heating elements 148 are resistive heating elements that reach an operating temperature very quickly, such as less than one second. As a result, laminating operations can be performed without the warm-up period required by conventional laminators utilizing heated laminating rollers, such as that described above with regard to FIGS. 4 and 5, or laminating plates.

One embodiment of the laminator 140 includes a motorized lift mechanism 152 that is configured to adjust the location of the one or more heating elements 148 relative to the processing path 124. The lift mechanism 152 can move the head 146 and its one or more heating elements 148 either closer to, or away from the processing path 124, as indicated by arrow 153, to adjust a pressure applied by the one or more heating elements 148 against the overlaminate material 100, allow for the installation of the overlaminate material 100 between the one or more heating elements 148 and the processing path 124, and/or to perform other functions.

One embodiment of the laminator 140 comprises a controller 154 that is configured to control the transfer or laminating operations of the laminator responsive to program instructions stored in a computer-readable medium, such as memory 156. The controller 154 represents one or more processors that are configured to execute the instructions. Thus, embodiments of the controller 154 are configured to control the transport mechanism 126 to feed the card substrates 144 along the processing path 124, the laminating head 146 including the activation of the one or more heating elements 148, the lift mechanism 152, the motor 150, and/or other components of the laminator 140 and other transfer or lamination operation processes.

In one embodiment, the one or more heating elements 148 of the head 146 are positioned in close proximity to, but are not in contact with, the backing layer 104 (FIGS. 1-2) or the web 108 (FIG. 3) of the overlaminate material 100 during the transfer operation to prevent sliding engagement between the laminating head 146 and the backing layer 104 or the web 108 of the overlaminate material 100. In one embodiment, the heating elements 148 of the head 146 engage the backing layer 104 or the web 108 of the overlaminate material 100 during the transfer operation. In one embodiment, the heating elements 148 of the head 146 engage the backing layer 104 or the web 108 of the overlaminate material 100 and press the overlaminate material 100 against the surface 112 of the substrate 144 during the transfer operation. In one embodiment, the backing layer 104 or the web 108 comprises a low adhesion backing to promote low friction sliding engagement between the backing layer 104 and the heating elements 148.

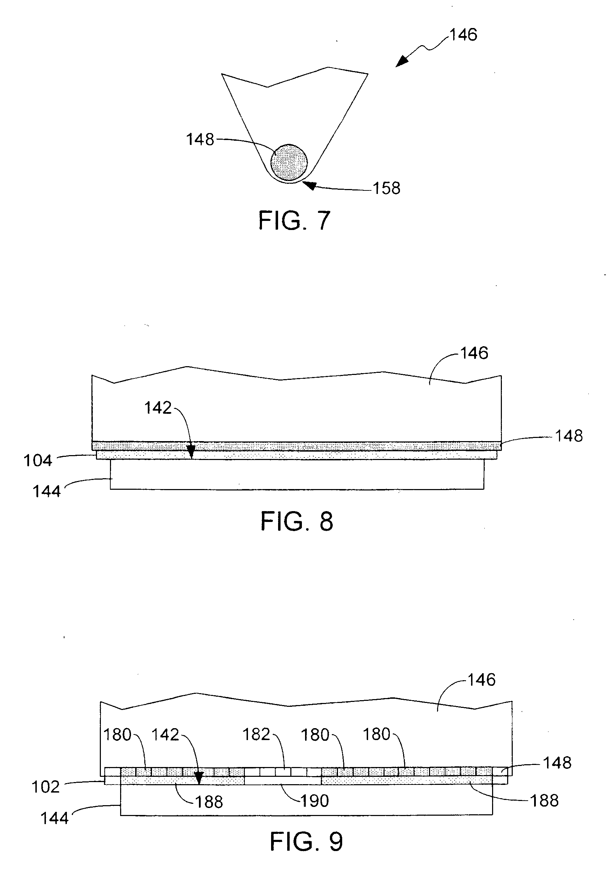

FIG. 7 is a side cross-sectional view of a portion of the laminating head 146, in accordance with embodiments of the invention. In one embodiment, the heating elements 148 are positioned proximate an exterior surface 158 that engages the backing layer 104 (shown) or the web 108 of the overlaminate material 100 during a laminating operation. In one embodiment, the exterior surface is 158 formed of a heat conductive material that transfers the heat generated by the one or more heating elements 148 to the transfer layer 102. In one embodiment, the exterior surface 158 is not part of a laminating roller or a laminating plate.

The embodiments described above with regard to the location of the heating elements 148 relative to the overlaminate material 100 during a transfer operation also apply to the laminating head 146 comprising the exterior surface 158. Thus, embodiments of the transfer operation include positioning the exterior surface 158 in close proximity, but not in contact with, the backing layer 104 or the web 108 during a transfer operation; positioning the exterior surface 158 in contact with the backing layer 104 or the web 108 during a transfer operation; and pressing the overlaminate material 100 against the surface 112 of the substrate 144 using the exterior surface 158. In one embodiment, the backing layer 104 or the web 108 comprises a low adhesion backing to promote low friction sliding engagement between the backing layer 104 and the exterior surface 158.

In one embodiment, the laminator 140 comprises one or more rollers 160 that are positioned adjacent the heating elements 148, as shown in FIG. 6. In one embodiment, the rollers 160 operate to compress the transfer layer 102 against the surface 112 of the substrate 144 before and/or after the transfer layer 102 is heated by the heating elements 148. The rollers 160 may be particularly useful when the heating elements 148 do not compress the transfer layer 102 against the surface 112 of the substrate 144. A platen 134 can be positioned immediately below the laminating head 146 and/or the rollers 160 to provide support for the substrate 144.

In one embodiment, the laminator 140 includes a peel off roller 136 that assists in the removal of the backing layer 104 or the web 108 from the transfer layer 102, as shown in FIG. 6. The backing layer 104 is then received by the take-up roller 132.

In one embodiment, a preheat zone 162 for the overlaminate material 100 is provided upstream of the head 146, as illustrated in FIG. 6. In one embodiment, the preheat zone 162 includes a section 164 that is configured to heat the overlaminate material 100 to a desired preheat temperature before reaching the head 146, a section 166 that is configured to heat the overlaminate material 100 and possibly the surface 142 of the substrate 144 to a desired preheat temperature before reaching the head 146, and/or a section 168 that is located between the surface 142 of the substrate 144 and the transfer layer 102 to heat the surface 142 of the substrate 144 and/or the transfer layer 102 to a desired preheat temperature before reaching the head 146. The preheat temperature is selected such that it is below the temperature at which the thermal adhesive 106 of the transfer layer 102 begins to activate. The sections of the preheat zone 162 may include one or more resistive heating elements that extend across the width of the material 100, such as those utilized in the head 146, or other suitable heating components.

Preheating the material 100 and/or the surface 142 reduces the amount of heat that must be transferred from the head 146 to the transfer layer 102 to cause the transfer layer 102 to bond to the surface 142 of the substrate 144. Accordingly, this preheating process can reduce the energy required by the head 146 to perform a transfer operation and increase the speed of the transfer operation. As an example, if the thermal adhesive in the transfer layer 102 is activated at 115.6°C (240°F), the preheat zone 162 can take the transfer layer 102 from ambient temperature to about 93.3°C (200°F). The head 146 must only provide additional heat that is necessary to raise the temperature of the adhesive of the transfer layer 102 above the activation temperature. This operation may be most useful when the backing layer 104 and/or the transfer layer 102 is thick, such as when the thickness of the backing layer 104 is greater than 0.0254 mm (1 mil).

In one embodiment, the laminator 140 includes an insulating zone 170 downstream of the head 146 and upstream of the peel off roller 136 (if present), as shown in FIG. 6. The insulating zone 170 operates to prevent the heated sections of the transfer layer 102 from cooling too rapidly to thereby increase the time for a bond to form between the thermal adhesive and the surface 142. Embodiments of the insulating zone 170 include an insulating section 172 located on the side of the substrate 144 corresponding to the surface 142, and/or a section 174 covering a bottom side 176 of the substrate 144, as shown in FIG. 6.

In one embodiment, the laminating head 146 comprises a single heating element 148, that extends over the entire width of the substrate 144, as illustrated in the simplified front cross-sectional view of FIG. 8. One exemplary component that may be used as the laminating head 146 is the single-dot head produced by Toshiba® having part number BHC10209NN.

In accordance with another embodiment, the laminating head 146 comprises a plurality of heating elements 148, such as, for example, 8-236 heating elements per cm (20-600 heating elements per inch), as illustrated schematically in the front cross-sectional view of FIG. 9. In one embodiment, each of the heating elements 148 may be individually placed in either an activated state 180 (shaded boxes), in which the heating element 148 is powered by a current (i.e., energized) and the element generates heat responsive to the current for the desired laminating operation, or a deactivated state 182 (white boxes), in which the heating element is not powered by a current (i.e., not energized). Thus, as shown in the simplified front view of FIG. 9, the laminating head 146 can have sections 180 where the heating elements 148 are activated and sections 182 where the heating elements 148 are deactivated. This allows the operator to eliminate or reduce the heating of specific portions of the overlaminate material 100 and the substrate 144 and avoid activating the thermal adhesive of the transfer layer 102 in some areas while heating specific portions of the overlaminate material 100 to activate the thermal adhesive of the transfer layer 102 in other areas.

In one embodiment, the laminating head 146 is in the form of a thermal print head used in dye sublimation printing operations. For example, a suitable laminating head 146 comprising multiple heating elements 148 may be formed using the Kyocera KPE Series print head with a resistance in the range of 1000 to 6000 ohms per heating element and heater lengths ranging from 0.150 to 0.300 mm and above. It is understood by those skilled in the art that the laminating head 146 is distinguishable from print heads in that it is used in the laminator 140 in combination with the overlaminate material 100, rather than a thermal print ribbon, for example. Further, the laminating head 146 performs a different function than the print head, namely causing the transference of the transfer layer 102 to the surface 142 of the substrate 144.

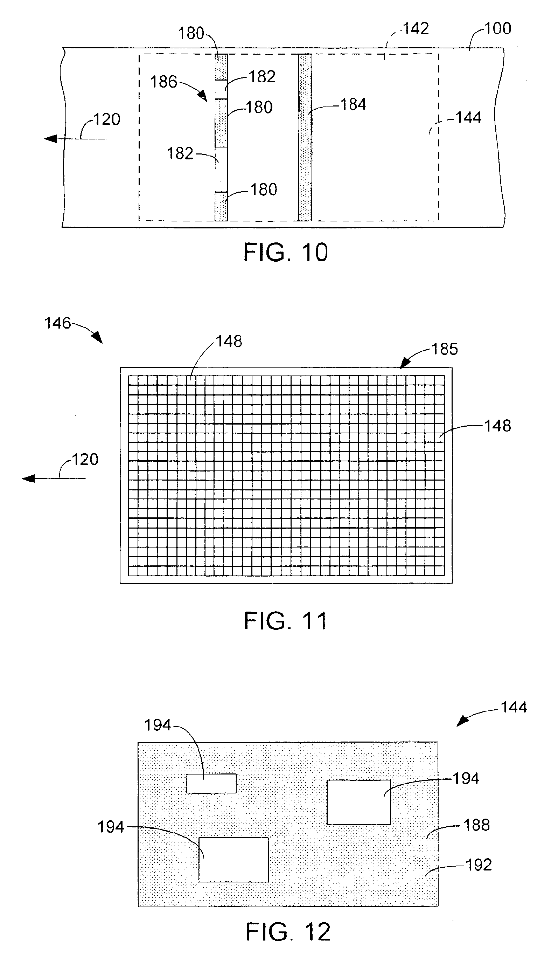

In one embodiment, the heating elements 148 are arranged in a line and are configured to generate a line of heat 184 that extends across the processing path 124 and the width of the substrate 144, as illustrated in FIG. 10, which is a top view of the overlaminate material 100 over a substrate 144. As the substrate 144 and the overlaminate material 100 are fed past the laminating head 146 in the feed direction 120, the line of heat 184 travels along the length of the substrate 144 and activates the thermal adhesive 106 of the transfer layer 102 to bond the transfer layer 102 to the surface 142 of the substrate 144. The backing layer 104 or web 108 is then peeled from the transfer layer 102 that has bonded to the substrate 144 using, for example, the peel off roller 136. This is useful when it is desirable to transfer the transfer layer 102 to the entire surface 142 of the substrate 144. When the transfer layer 102 is in the form of a fracturable thin film, portions of the transfer layer 102 that extended over the side edges of the substrate 144 during the transfer operation remain adhered to the backing layer 104 during the peel off step.

In accordance with another embodiment, the plurality of heating elements 148 (represented by the small boxes) are arranged in a two-dimensional array 185, as shown in the simplified bottom view of the laminating head 146 of FIG. 11. Embodiments of the two-dimensional array 185 include two or more rows or lines of the heating elements 148 that extend across the processing path 124 and preferably across the width of the substrate 144. In one embodiment, the array 185 has an area that is as large or larger than the area of the surface 142 of the substrate 144. This allows the laminating head 146 to form multiple lines of heat simultaneously. In one embodiment, the substrate 144 is held stationary relative to the laminating head 146 during a lamination operation and the heating elements 148 are activated to activate the adhesive 106 of the transfer layer 102 and bond the transfer layer 102 to the surface 142. The backing layer 104 or web 108 is then peeled from the transfer layer 102 that has bonded to the substrate 144 using, for example, the peel off roller 136.

It is common for substrates 144 to include features such as, for example, embedded circuitry, electrical contacts, magnetic stripes, signature panels, holographic images and other features. It may be desirable to avoid heating and/or applying the transfer layer 102 over the portions of the substrate 144 where such features are located.

In one embodiment, the overlaminate material 100 comprises a transfer layer 102 in the form of a thin film or fracturable laminate. Only the portions of the transfer layer 102 that are sufficiently heated (i.e., activated) by the heating elements 148 of the laminating head 146 bond and transfer to the substrate 144. The portions of the transfer layer 102 that are not sufficiently heated (i.e., not activated) by the heating elements 148 remain adhered to the backing layer 104. In accordance with this embodiment, the controller 154 selectively activates (i.e., energizes) the heating elements 148 of the head 146 of FIG. 9, as the overlaminate material 100 and the substrate 144 are fed along the processing path 124 in the feed direction 120, to selectively heat the portions of the overlaminate material 100. More specifically, the activated heating elements 180 heat and activate the thermal adhesive 106 of the adjacent portion of transfer layer 102 such that the thermal adhesive will bond to the surface 142 of the substrate 144. As a result, the activated heating elements 180 determine the portions of the transfer layer 102 that will be activated and bonded to the surface 142 of the substrate 144. The remaining deactivated heating elements 182 do not heat the adjacent portions of the transfer layer 102 to the level at which the thermal adhesive 106 becomes activated. Thus, the portions of the transfer layer 102 adjacent the deactivated heating elements 182 are not activated and do not bond to the surface 142 of the substrate 144.

Accordingly, the head 146 can be used to form a line of heat 186 having heated sections 188 corresponding to activated heating elements 180 and non-heated sections 190 corresponding to deactivated heating elements 182, as shown in FIGS. 9 and 10. The heated sections 188 correspond to activated portions of the transfer layer 102 where the thermal adhesive 106 is activated and bonds to the surface 142 of the substrate 144. The portions of the transfer layer 102 adjacent the non-heated sections 190 are deactivated because there is insufficient heat to activate the thermal adhesive 106 at those locations. The selective activation of the adhesive 106 of the transfer layer 102 may also be accomplished using the array 185 of heating elements 148 shown in FIG. 11 through the simultaneous formation of two or more lines of heat 186.

The selective activation and deactivation of the heating elements 148 by the controller 154 as the overlaminate material 100 and the substrate 144 are fed past the laminating head 146 causes activated portions 188 of the transfer layer 102 to bond to the surface 142. The backing layer 104 is then removed from the bonded or activated portions 188. The deactivated portions 190 of the transfer layer 102 that did not bond to the surface 142 remain adhered to the backing layer 104. As a result, the surface 142 of an exemplary processed substrate 144, shown in the top view of FIG. 12, includes portions 192 that are covered by the activated portions 188 of the transfer layer 102, and portions 194 that are uncovered because they correspond to the deactivated portions 190 of the transfer layer 102 that remain attached to the backing layer 104.

When the laminating head 146 comprises the array 185 of heating elements 148 that cover the surface 142 of the substrate 144, the substrate 144 may be held in place relative to the head 146 during the selective heating of the transfer layer 102 by the heating elements 148. The substrate 144 may then be fed along the processing path 124 and the backing layer 104 may be peeled from the activated portions of the transfer layer 102 that remain adhered to the surface 142 of the substrate 144 to form the processed substrate 144 shown in FIG. 12.

In one embodiment, the portions 194 correspond to the locations of the substrate 144 where features, such as those described above (magnetic stripe, signature panel, electrical contacts, etc.) are located. Thus, these features can remain free of the transfer layer 102. Additionally, excessive heating of the feature areas of the substrate 144 can also be avoided.

The laminator 140 has several advantages over the laminators of the prior art that utilize conventional heated laminating rollers 116, such as laminator 110. One advantage is the elimination of the warm up period required by conventional laminators. Rather, the one or more heating elements 148 can be almost instantaneously ready to perform a laminating operation. This is due, in part, to the close proximity of the heating elements 148 to the transfer layer 102 during laminating operations. The laminator 140 is also much more energy efficient than conventional laminators due to the elimination of the warm up time and idle periods, in which the laminating roller 116 is maintained in a heated state.

The selective localized heating that is possible using the laminating head 146 can also allow laminates to be applied to more heat sensitive substrates such a 100% PVC materials versus materials which provide greater heat stability such as PVC/PET composites.

The recent acceptance of instant-issued bank cards has created a need for protection of graphics on bank cards, while retaining the functionality of card features such as magnetic stripes, signature panels, holographic images, and contact electronic communications between an external device and the card. The functionality of these features is often compromised due to protective overlays and print intermediates adhering to the functional features and rendering them useless. Embodiments of the laminator 140 provide solutions to these problems.

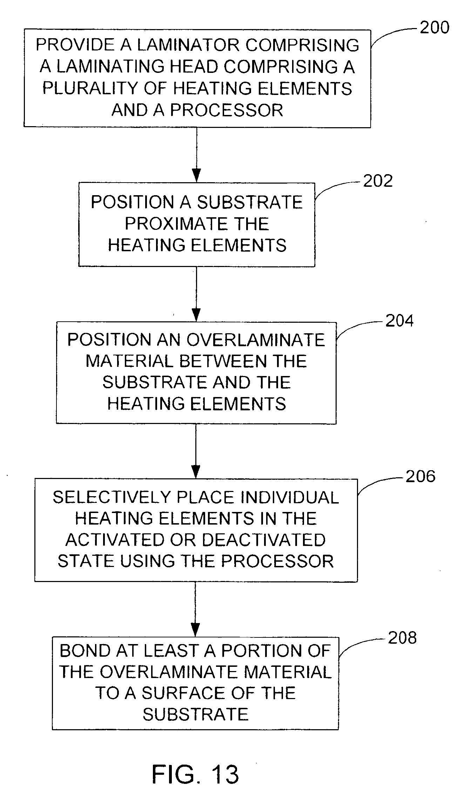

FIG. 13 is a flowchart illustrating a method in accordance with embodiments of the invention. In one embodiment, a laminator 140 is provided, at 200, that comprises a laminating head 146 having a plurality of heating elements 148 and a processor 154, each formed in accordance with embodiments described above. In one embodiment, each heating element 148 has an activated state, in which the heating element 148 is powered by a current, and a deactivated state, in which the heating element 148 is not powered by a current, as discussed above. The laminator 140 may also include other components and features in accordance with the embodiments described above.

At 202, a substrate 104 is positioned proximate the heating elements 148 and, at 204, an overlaminate material 100 is positioned between the substrate 144 and the heating elements 148, such as illustrated in FIGS. 6 and 9. The substrate 144 and the overlaminate material 100 are formed in accordance with one or more of the embodiments described above.

At 206, the individual heating elements are each selectively placed in the activated or deactivated state using the processor. One or more portions 188 of the transfer layer 102 are activated using the activated heating elements 180, as discussed above. At 208, at least a portion 188 of the overlaminate material 100 is bonded to a surface 142 of a substrate 144 responsive to step 206.

In one embodiment, a backing layer 104 of the overlaminate material is removed from the at least one activated portion 188 of the transfer layer 102. Non-activated portions 190 of the transfer layer 102 located adjacent the deactivated heating elements 182 during step 206 remain adhered to the backing layer 104. The resultant laminated surface 142 of the substrate 144 includes portions 192 covered by the activated portions 188 of the transfer layer 102 and portions 194 that are not covered by the transfer layer 102, as shown in FIG. 12.

In a method in accordance with another embodiment of the invention, a laminator 140 is provided that comprises a transport mechanism 126, an overlaminate material 100 and a laminating head 146. The transport mechanism 126 is configured to deliver individual substrates 144 along a processing path 124. The overlaminate material 100 may comprise a transfer layer 102 in the form of a patch laminate or a fracturable thin film, as described above. In one embodiment, the laminating head 146 comprises a single heating element 148 located proximate to the backing layer 104, as shown in FIG. 8. The heating element 148 comprises an activated state 180, in which it is energized, and a deactivated state 182, in which it is not energized. The heating element 148 activated by the controller 154 and the activated heating element activates portions 188 of a thermal adhesive 106 at an adjacent portion 188 of the thermal transfer layer 102. The activated portions 188 are bonded to a surface 142 of a substrate 144 presented by the transport mechanism 126. The backing layer 104 is then removed. In one embodiment, the heating element 148 is activated over substantially the entire surface 142 of the substrate 144 as the substrate is fed past the heating element 148 causing the overlaminate material 100 to apply either a patch laminate or a transfer layer to substantially the entire surface 142 of the substrate 144. The above method may also be performed using the laminating head 146 shown in FIG. 9 by activating a plurality of the heating elements 148 to form the line of heat 184 shown in FIG. 10.

Although the present invention has been described with reference to preferred embodiments, workers skilled in the art will recognize that changes may be made in form and detail without departing from the scope of the invention.

## Claims

1. A laminator (140) comprising:
a laminating head (146) comprising a plurality of heating elements (148), each heating element having an activated state (180), in which the heating element is powered by a current, and a deactivated state (182), in which the heating element is not powered by a current; and
a processor (154) selectively placing the individual heating elements in the activated or deactivated state to bond at least a portion (188) of an overlaminate material (100) to a surface (142) of a substrate (144).

2. The laminator of claim 1, wherein the plurality of heating elements are in a line.

3. The laminator of claim 2, further comprising a transport mechanism (126) configured to deliver individual substrates along a processing path (124) to the laminating head.

4. The laminator of claim 3, wherein the line is substantially perpendicular to the processing path.

5. The laminator of claim 1, wherein the plurality of heating elements are arranged in a two-dimensional array (185).

6. The laminator of any of claims 1, 2 and 5, further comprising:
the overlaminate material;
a means (126) for positioning the substrate proximate the heating elements; and
a means (130, 132) for positioning the overlaminate material proximate the heating elements.

7. The laminator of claim 6, wherein the overlaminate material comprises a thin film laminate (102).

8. The laminator of claim 6, wherein the overlaminate material comprises a patch laminate (102).

9. A method comprising:
providing (200) a laminator (140) comprising:
a laminating head (146) comprising a plurality of heating elements (148), each heating element having an activated state (180), in which the heating element is powered by a current, and a deactivated state (182), in which the heating element is not powered by a current; and
a processor (154);
positioning (202) a substrate (144) proximate the heating elements;
positioning (204) an overlaminate material (100) between the substrate and the heating elements;
selectively placing (206) the individual heating elements in the activated or deactivated state using the processor; and
bonding (208) at least a portion (188) of the overlaminate material to a surface (142) of the substrate responsive to selectively placing the individual heating elements in the activated or deactivated state.

10. The method of claim 9, wherein:
the overlaminate material comprises a thin film laminate (102); and
the method further comprises activating portions (188) of the thin film laminate using the heating elements placed in the activated state; and
bonding at least a portion of the overlaminate material to a surface of the substrate comprises bonding the activated portions of the thin film laminate to the surface, wherein non-activated portions of the thin film laminate are not bonded to the surface.

11. The method of claim 10, wherein:
the substrate includes a location (194) on the surface; and
activating portions of the thin film laminate using the heating elements placed in the activated state comprises activating portions of the thin film laminate that do not correspond to the location on the surface;
wherein portions (190) of the thin film laminate do not bond to the surface of the substrate at the location.

12. The method of claim 11, wherein the location comprises a feature selected from the group consisting of an electrical contact, a magnetic stripe, a signature panel and a holographic image.

## Patentansprüche

1. Laminiervorrichtung (140), die Folgendes umfasst:
einen Laminierkopf (146), der mehrere Heizelemente (148) enthält, wobei jedes Heizelement einen aktivierten Zustand (180), in dem das Heizelement mit Strom versorgt wird, und einen deaktivierten Zustand (182), in dem das Heizelement nicht mit Strom versorgt wird, besitzt; und
einen Prozessor (154), der die einzelnen Heizelemente wahlweise in den aktivierten oder deaktivierten Zustand versetzt, um wenigstens einen Abschnitt (188) eines auflaminierten Materials (100) an einer Oberfläche (142) eines Substrats (144) zu befestigen.

2. Laminiervorrichtung nach Anspruch 1, wobei die mehreren Heizelemente in einer Linie angeordnet sind.

3. Laminiervorrichtung nach Anspruch 2, die ferner einen Transportmechanismus (126) umfasst, der konfiguriert ist, einzelne Substrate längs eines Bearbeitungswegs (124) zu dem Laminierkopf auszugeben.

4. Laminiervorrichtung nach Anspruch 3, wobei die Linie zu dem Bearbeitungsweg im Wesentlichen senkrecht ist.

5. Laminiervorrichtung nach Anspruch 1, wobei die mehreren Heizelemente in einer zweidimensionalen Matrix (185) angeordnet sind.

6. Laminiervorrichtung nach einem der Ansprüche 1, 2 und 5, die ferner Folgendes umfasst:
das Auflaminiermaterial;
ein Mittel (126) zum Positionieren des Substrats in der Nähe der Heizelemente; und
ein Mittel (130, 132) zum Positionieren des Auflaminiermaterials in der Nähe der Heizelemente.

7. Laminiervorrichtung nach Anspruch 6, wobei das Auflaminiermaterial ein Dünnschichtlaminat (102) umfasst.

8. Laminiervorrichtung nach Anspruch 6, wobei das Auflaminiermaterial ein Flickenlaminat (102) umfasst.

9. Verfahren, das Folgendes umfasst:
Bereitstellen (200) einer Laminiervorrichtung (140), die umfasst:
einen Laminierkopf (146), der mehrere Heizelemente (148) enthält, wobei jedes Heizelement einen aktivierten Zustand (180), in dem das Heizelement mit Strom versorgt wird, und einen deaktivierten Zustand (182), in dem das Heizelement nicht mit Strom versorgt wird, besitzt; und
einen Prozessor (154);
Positionieren (202) eines Substrats (144) in der Nähe der Heizelemente;
Positionieren (204) eines Auflaminiermaterials (100) zwischen dem Substrat und den Heizelementen;
wahlweises Anordnen (206) der einzelnen Heizelemente in dem aktivierten oder dem deaktivierten Zustand unter Verwendung des Prozessors; und
Befestigen (208) wenigstens eines Abschnitts (188) des Auflaminiermaterials an einer Oberfläche (142) des Substrats in Reaktion auf das wahlweise Versetzen der einzelnen Heizelemente in den aktivierten oder deaktivierten Zustand.

10. Verfahren nach Anspruch 9, wobei:
das Auflaminiermaterial ein Dünnschichtlaminat (102) enthält; und
das Verfahren ferner das Aktivieren von Abschnitten (188) des Dünnschichtlaminats unter Verwendung der in den aktivierten Zustand versetzten Heizelemente umfasst; und
das Befestigen wenigstens eines Abschnitts des Auflaminiermaterials an einer Oberfläche des Substrats das Befestigen der aktivierten Abschnitte des Dünnschichtlaminats an der Oberfläche umfasst, wobei nicht aktivierte Abschnitte des Dünnschichtlaminats nicht an der Oberfläche befestigt werden.

11. Verfahren nach Anspruch 10, wobei:
das Substrat einen Ort (194) auf der Oberfläche aufweist; und
das Aktivieren von Abschnitten des Dünnschichtlaminats unter Verwendung der in den aktivierten Zustand versetzten Heizelemente das Aktivieren von Abschnitten des Dünnschichtlaminats, die nicht dem Ort auf der Oberfläche entsprechen, umfasst;
wobei Abschnitte (190) des Dünnschichtlaminats an dem Ort nicht an der Oberfläche des Substrats befestigt sind.

12. Verfahren nach Anspruch 11, wobei der Ort ein Merkmal enthält, das aus der Gruppe gewählt ist, die besteht aus einem elektrischen Kontakt, einem Magnetstreifen, einer Signaturtafel und einem holographischen Bild.

## Revendications

1. Appareil (140) à laminer comportant :
une tête (146) de laminage comportant une pluralité d'éléments chauffants (148), chaque élément chauffant possédant un état activé (180), dans lequel l'élément chauffant est alimenté par un courant, et un état désactivé (182), dans lequel l'élément chauffant n'est pas alimenté par un courant ; et
un dispositif de traitement (154) plaçant sélectivement les éléments chauffants individuels dans l'état activé ou désactivé pour coller au moins une partie (188) d'un matériau supérieur (100) de laminage à une surface (142) d'un substrat (144).

2. Appareil à laminer selon la revendication 1, la pluralité d'éléments chauffants se situant sur une ligne.

3. Appareil à laminer selon la revendication 2, comportant en outre un mécanisme (126) de transport configuré pour amener des substrats individuels le long d'un parcours (124) de traitement jusqu'à la tête de laminage.

4. Appareil à laminer selon la revendication 3, la ligne étant sensiblement perpendiculaire au parcours de traitement.

5. Appareil à laminer selon la revendication 1, la pluralité d'éléments chauffants étant disposée en une matrice bidimensionnelle (185).

6. Appareil à laminer selon l'une quelconque des revendications 1, 2 et 5, comportant en outre :
le matériau supérieur de laminage ;
un moyen (126) de positionnement du substrat à proximité des éléments chauffants ; et
un moyen (130, 132) de positionnement du matériau supérieur de laminage à proximité des éléments chauffants.

7. Appareil à laminer selon la revendication 6, le matériau supérieur de laminage comportant un stratifié (102) en film mince.

8. Appareil à laminer selon la revendication 6, le matériau supérieur de laminage comportant un stratifié (102) par pièces.

9. Procédé comportant les étapes consistant à :
mettre en place (200) un appareil (140) à laminer comportant :
une tête (146) de laminage comportant une pluralité d'éléments chauffants (148), chaque élément chauffant possédant un état activé (180),
dans lequel l'élément chauffant est alimenté par un courant, et un état désactivé (182), dans lequel l'élément chauffant n'est pas alimenté par un courant ; et
un dispositif (154) de traitement ;
positionner (202) un substrat (144) à proximité des éléments chauffants ;
positionner (204) un matériau supérieur (100) de laminage entre le substrat et les éléments chauffants ;
placer sélectivement (206) les éléments chauffants individuels dans l'état activé ou désactivé en utilisant le dispositif de traitement ; et
coller (208) au moins une partie (188) du matériau supérieur de laminage à une surface (142) du substrat en réaction au placement sélectif des éléments chauffants individuels dans l'état activé ou désactivé.

10. Procédé selon la revendication 9 :
le matériau supérieur de laminage comportant un stratifié (102) en film mince ; et
le procédé comportant en outre une étape consistant à activer des parties (188) du stratifié en film mince en utilisant les éléments chauffants placés dans l'état activé ; et
le collage d'au moins une partie du matériau supérieur de laminage à une surface du substrat comportant une étape consistant à coller les parties activées du stratifié en film mince à la surface, des parties non activées du stratifié en film mince n'étant pas collées à la surface.

11. Procédé selon la revendication 10 :
le substrat comprenant un emplacement (194) sur la surface ; et
l'activation de parties du stratifié en film mince en utilisant les éléments chauffants placés dans l'état activé comportant une étape consistant à activer des parties du stratifié en film mince qui ne correspondent pas à l'emplacement sur la surface ;
des parties (190) du stratifié en film mince ne se collant pas à la surface du substrat à l'emplacement.

12. Procédé selon la revendication 11, l'emplacement comportant une entité choisie dans le groupe constitué d'un contact électrique, d'une bande magnétique, d'un panneau de signature et d'une image holographique.
